# EUROPEAN PATENT APPLICATION

(11) **EP 3 236 096 A1**
(43) Date of publication of application: **25.10.2017**
(21) Application number: 15820875.1
(22) Date of filing: 15.12.2015
(51) Int. Cl.: F16C 33/78, F16C 19/18

(54) **SEALING MEANS FOR BEARING OF AERO-GENERATOR**

(30) Priority: 16.12.2014 ES 201431850
(71) Applicant: Laulagun Bearings, S.L., 20212 Olaberria, Guipuzcoa (ES)
(72) Inventor: MAIZ BAZTARRIKA, Haritz, 20212 Olaberria - Guipúzcoa (ES); DAMIÁN CRUZ, Jorge, 20212 Olaberria - Guipúzcoa (ES)
(74) Representative: Carvajal y Urquijo, Isabel
(86) International application number: PCT/ES2015/070905
(87) International publication number: WO 2016/097446

(57) **Abstract**

The present invention relates to an oil seal for wind turbine blade or roller bearings which is characterized by being an element which combines radial oil sealing, which is more known in the prior art, with axial oil sealing, which is novel and obtained with a characteristic beam (12) combined with axial lips.

The mentioned oil seal is applied in the gap (4) formed between the rings (2, 3) of a large-sized ball or roller bearing and subjected to large displacements and wear caused by friction. It is secured with a cover (9) in contact with the body of the oil seal and with a fixing element (8) screwed to the outer ring (3). It has two radial lips (10, 11) in a V shape in contact with the inner ring (2). A guiding system with a beam (12) extends from the bisector of the mentioned lips (10, 11) which is combined with either its own bosses (15, 16) in the surface thereof or else with a hole (20) in the center and a tapering, and ending in an arrowhead with at least two axially preloaded lips (13, 14), which can be several lips (17, 18, 19). The end part of the beam (12) and the arrowhead are inserted in a rectangular groove (7) made in the inner ring (2).

## Description

### Field of the Invention

The present invention is comprised in the field of large bearings used in the wind power industry, and more specifically, in the oil sealing devices used to prevent the loss of lubricating substances existing in ball or roller bearings.

### Background of the Invention

Primarily wind turbine, blade and rotor bearings today are experiencing an increase in size proportional to the increase in power. If wind turbines having a power measured in kilowatts were being sold years ago, today wind turbines having a power reaching several megawatts are being sold today. The important development experienced in offshore wind turbines has also boosted this increase in size.

These new bearings require new designs in the field of sealing the lubricant contained in them and in the reinforcements that allow them to work with larger axial and radial displacements.

In that sense, different oil seal or seal solutions taking different needs into account and providing different solutions are known in the prior art.

Patent document DE 10309383 discloses an oil seal arranged between two rings. The fixing of the seal on the left side implements only a base support and the introduction of a non-corrosive material inside the actual body of the seal. The fixing of the seal on the right side in the inner ring has two main lips: one that is completely adhered to the wall of the ring and the other having the shape of a hook which is in contact with the two walls of the rings. In turn, the fixing in the groove is done by means of a plug with flanges, which is widely used and well-known today. The solution showing this design is based on a non-corrosive, preferably metallic, material on which the oil sealing element is arranged. It is particularly applicable in offshore technology.

Patent document DE 102005041720 discloses an oil seal made up of two parts. Said two parts consist of a first seal (11) made of an elastic material, fixed to one of the rings and having at least one sealing lip, and a second sealing part (12) fixed to the other ring and adding a band made of a different material extending inside the lip of the first seal (11). The purpose of this metal band is to better withstand the wear sustained by the oil seal in saline environment conditions and to withstand stresses due to the large bearing sizes today.

Patent document DE 2020080173339 (WO 2009143972) discloses a seal made from an elastomer material and with two different regions, i.e., the outer ring and the inner ring. The sealing material internally has a spring-type element formed by a strip of metal; it is a metal reinforcement arranged on the outer superficial part for the purpose of stiffening this area. The metallic reinforcement element is arranged both in the top part of the oil seal and in the bottom part thereof, always reinforcing one of the lips that are in contact with the inner ring.

Patent document US 20140161619 discloses an oil seal anchored in the outer ring and the other tip, the one corresponding to the inner ring, has two circular lips inserted in a narrow channel. The channel is straight (this same applicant has other patents with a tilted channel) and each lip is in contact with a wall of the channel, one lip pressing on the top part and the other lip pressing on the bottom part. In addition to these circular lips, there is another lip located above these two lips which presses on the inner ring. Finally, there is pronounced tapering between the circular lips and the central round part. This peculiar design prevents the losses of lubricant outside the pressure-applying lips with the rings.

Patent document US 20110103728 shows a seal arranged between two rings: A) being arranged on the left side on a base support in the form of a projection with a boss on one side and tongues or creases on the other side, said base locking the general body of the oil seal; and B) having another C-shaped projection with a double lip facing the bottom of the channel, the tips of both lips ending in thickened semispherical areas. Areas A and B are attached in one part with significant tapering, this being a design that seeks to reduce the points of contact of the oil seal, dispensing with the conventional 8 points and reducing them to only two.

However, these patents do not solve problems related to the radial and axial forces generated in these new oils seals due to the large size thereof. The new conditions that these new bearings face considerably affect the operation of the oil seal system since they must absorb larger displacements, assuring the tightness between the bearing rings. It must also be added that machine manufacturers demand an increasingly longer service life of the oil seal, i.e., less wear and fewer permanent deformations.

### Description of the Invention

The invention relates to an oil sealing system for large-sized wind turbine bearings, taking into account what occurs with the displacements of these large oils seals because:
- Since it experiences increasingly larger radial separation and compression displacements between the rings, increasingly greater preloading in the contacting lips is required. This means that the torque increases greater, that the wear of the oil seal is greater, that assembly of the oil seal is more complicated, etc.
- Since it experiences increasingly larger axial displacements, the lips touch the guiding flange and this makes the torque increase, and it especially causes there to be a reaction which brings about the loss of contact of the lip with the wall, and therefore the tightness thereof.

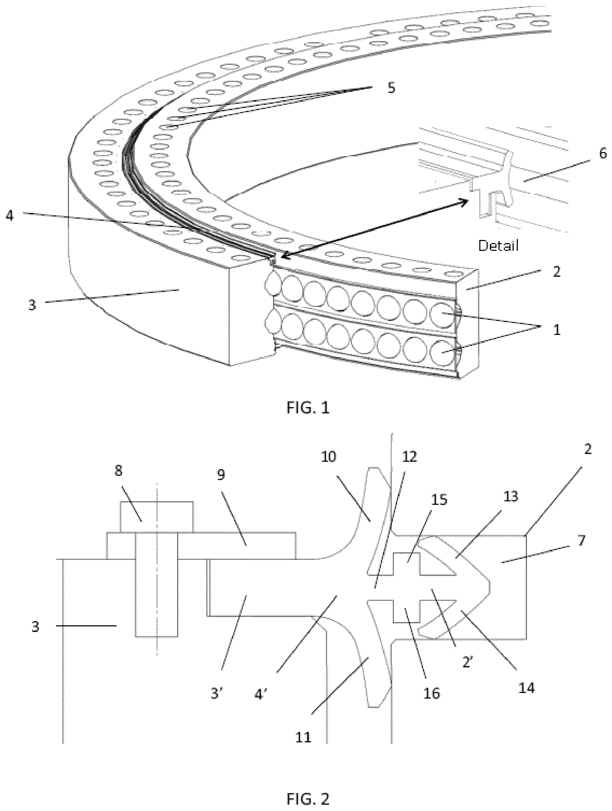

The basic characteristics of a radial oil seal are the following:
a) Having at least two lips, one of which acts like a dust guard and the other being the main lip or the lip responsible for tightness. These lips are applied on the moving ring or on the stationary ring (depending on in which part of the bearing the oil seal is arranged, as shown in Figure 1) having a corrugated flange constituting the guiding element for the mentioned lips.
b) Maintaining the tightness by withstanding the pressures from the liquid lubricant (preferably grease), displacements and structural deformation.
c) Maintaining both a static and dynamic torque to the greatest extent possible.
d) Maintaining wear and aging compatible with the design duration.
e) Being susceptible to assembly/replacement in a machine since, due to the complicated access to the area, the ease in making this change is an important factor.

Therefore, with the demands due to axial and radial displacements and based on these basic characteristics already known in the prior art, a new oil seal solving the aforementioned problems and offering constructive improvements is developed. This is achieved with an oil seal that goes from being strictly radial to being and axial and radial oil seal with the following features:
It is a mixed system, it maintains the two radial lips known in the prior art and adds an axial end to it working in a groove.

The two lips, the top lip or dust guard, and the bottom lip or the lip responsible for tightness, extend radially towards the moving ring in which the new central beam and the axial lips are fixed. This way of guiding the radial lips means that the assembly is less affected by the large radial and axial deformations existing. Furthermore, the guiding behavior is mechanically more efficient because it has been optimized through FEM simulation, and finally a guiding system with a beam has been achieved that is more robust with respect to misalignment errors compared with earlier systems without a beam or axially preloaded lips.

There is also an important reduction in material and lessening of the cost of the bearing, as the flange that in the past extended along the periphery of the ring, which was arranged between the radial lips and is not replaced with a groove, is not required.

The new beam achieves optimal guiding-centering under and under deformations, and the lips provide greater resistance to radial displacements, limiting bending under a load.

A first practical embodiment relates to a beam with bosses, which means that the oil seal withstands more under the pressure of the grease, since these bosses prevent the inner radial lip from being inserted in the groove they protect, since these bosses are the parts that first come into contact inside the groove.

In a second practical embodiment, the beam extends from the bisector forming the radial lips and gradually tapers towards the axial lips arranged at the tip of the beam. In this embodiment, a hole is made in the area of confluence of the radial lips and the beam. This hole breaks the continuity of the arm and the force of friction making the inner lips of the central beam pull on the radial lips, maintaining contact in a more efficient manner.

The assembly of the bottom or leak-tight lip and the beam (with the lip/lips and bosses thereof) form a labyrinth effect through which there is head loss and the grease seepage or loss of tightness is made considerably more complicated, since a labyrinth seal presents a winding path to increase resistance of the fluid that is to go through it.

Furthermore, the assembly can be energized and radially preloaded by means of a cover with the dual functionality of provided support and stiffness.

Finally, it must be pointed out that manufacturing tolerances in large bearings are normally greater and it is increasingly more difficult to achieve proper alignment between the oil seal and the formerly used flange. This system is less sensitive to slight misalignments, since with the radial lips they are combined with a central beam with bosses and with at least two axial lips in a groove.

The following advantages can be inferred from the foregoing: better dynamic performance of the oil seal, since under rapid separating movement of the rings, the radial lips quickly lose contact pressure because the material is not elastic enough to follow the ring. However, the arrow shape of the oil seal due to friction with the walls creates a certain pulling effect, which helps the lips follow the ring. It is understood that since it has an arrow shape this friction is greater when the attempt is made to separate the ring than when they are joined, and in any case it provides certain attachment between the components, providing a better guiding of the radial lips. The radial lips work better with the beam than without the beam with respect to misalignments. This is because the reactions of the beam compensate for them and it is a good guiding or centering system, so that the radial lips maintaining greater contact pressure. If the lip is too vertical, it loses contact pressure.

### Brief Description of the Drawings

A series of drawings helping to better understand the invention and expressly related to an embodiment of said invention, described as a non-limiting example thereof, is very briefly described below.
Figure 1 shows a double-row ball bearing configuration and an oil seal comprised in the prior art.
Figure 2 shows the specific design of the new oil seal of the invention.
Figure 3 shows a second embodiment of the end of the oil seal.
Figure 4 shows a second embodiment of the beam of the oil seal.

### Detailed Description of the Invention

The oil seal object of the invention relates to a bearing such as the one shown in Figure 1. Specifically, it is a wind turbine blade bearing. The blade is an aerodynamic element controlling the power generated by the wind turbine, changing the orientation thereof with respect to the wind by means of the pitch movement thereof. The new control algorithms make the blade an element that is moving continuously, which increases the number of cycles required by the blade bearing and accordingly by the oil seal. The drawing shows a double-row ball bearing (1) arranged between two rings: the inner ring (2) and the outer ring (3). A gap (4) is created between both rings which is covered by the corresponding oil seal. Both rings have holes (5) along their periphery where the corresponding fixing elements of the blade and of the hub (not shown in the drawing) are inserted. The inner ring (2) (or outer ring, since depending on the configuration it can be the outer ring) is where the flange (6), which in older radial oil seals acted as a guiding element for the lips of the oil seal, is arranged.

This flange (6) no longer exists in the new oil seal, and it has been replaced, where appropriate, with a groove (7), as shown in Figure 2. Another important difference is the way the oil seal is fixed in the outer ring (3). Now it is fixed by means of a fixing element (8) inserted in the outer ring (3) and bearing a cover (9) that is in contact with the body of the oil seal, all this according to the profile section shown. The cover (9), in its longitudinal form, is segmented and covers the diameter of the rings in parts, using the fixing elements that are necessary in each of the segments.

The oil seal is made from a rubber-type material and has a side part (3') in contact with the outer ring (3), an intermediate part (4') and an end part (2') in contact with the inner ring (2). The side part (3') corresponding to the outer ring (3) is fitted in a stepped gap of the ring and is covered by the cover (9) at the same height as the outer part of the outer ring (3). The two radially preloaded lips (10, 11), a central beam (12) having a uniform body extending as a bisector between the two radial lips (10, 11), and a tip where there are at least two axially preloaded lips (13, 14) are then arranged.

The radially preloaded lips (10, 11) are arranged in the intermediate part (4') of the oil seal and rest on the wall of the inner ring (2). These lips do not have to have the same length and can have one end longer than the other, and there can be more material at the tips directly rubbing against the inner ring (2). The top lip (10) is the dust guard and the bottom lip (11) is the leak-tight lip as it is in contact with the grease of the bearing.

The end part (2') of the oil seal corresponds to the beam (12) and to the end or tip thereof. Both elements penetrate the groove (7) existing in the inner ring (2). The beam (12) has two bosses, a top boss (15) and a bottom boss (16) serving as a guide for the oil seal, hitting against the walls of the groove (7), which serve as a reinforcement for the stiffness of the beam (12) itself and in turn prevent the radial lips (10, 11) from penetrating the groove (7). The embodiment shown in Figure 2 has a harpoon- or arrow-shaped end formed by two axially preloaded lips (13, 14), and these lips do not have to be symmetrical, each of the sides thereof being able to have a different length and there being more material in the areas where wear caused by friction with the walls of the ring can occur.

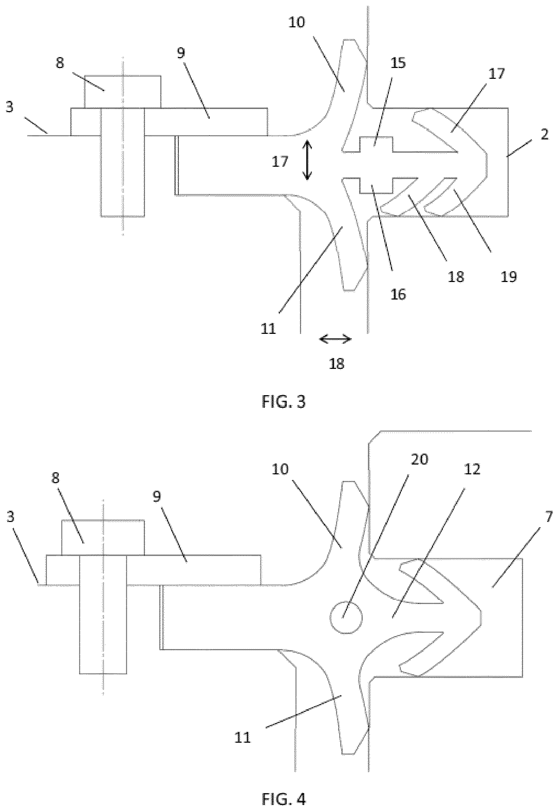

Figure 3 shows a second practical embodiment incorporating some variations that can be presented at final end of the beam (12). These variations are determined by the large displacements in the axial direction (17) and in the radial direction (18) to which these oils seals are subjected.

When radial displacement (18) is very large, the lips (10, 11) lose their preload. To prevent this, oils seals are manufactured from more resistant materials, and greater thickness is provided at the base and in the rest of the inner or bottom lip (providing tightness). The length of the outer or top lip (acting as a dust guard) can also vary. In the same manner, since increasingly larger axial displacements (17) occur, the lips (10, 11) touch the wall of the inner ring, and this increases the torque and especially causes a reaction which causes the loss of contact between the lip and the wall, and therefore causes a loss in tightness of the inner lip.

However, the most significant changes are made to the beam (12) and the accessories incorporated therein. Therefore, the thickening in the top part (15) and bottom part (16) of the beam (12) can be increased for the purpose of preventing the lips (10, 11) from penetrating the groove (7). In this manner the thick parts of the beam (12) hit against the groove (7), preventing the sealing lips (10, 11) from failing and more specifically preventing the bottom lip (11) from allowing the grease maintained inside the bearing from seeping out. The top thickening (15) and bottom thickening (16) can have any type of round shape, oval shape, square shape, rectangular shape, etc.

The tip of the beam (12) also changes, and there is arranged a labyrinth-like tip having a more winding path than that which is presented in the preceding embodiment. To that end, axially preloaded lips are arranged, said lips being dual lips in the inner area. Using the groove (7) existing in the inner ring (2) as a reference, in the inner part there of there is one top lip (17) and two bottom lips (18, 19). This achieves a labyrinth oil sealing, increasing the resistance of the fluid that is to go through it.

Figure 4 shows a second practical embodiment of the beam (12) extending from the bisectorforming the radial lips (11, 12) and it tapers off towards the axial lips arranged at the tip of the beam (12). There is a hole (20) in the area of confluence of the radial lips and the beam (12), right in the center of the area of confluence formed by the bisector of the radial lips (11, 12).

## Claims

1. An oil seal for a wind turbine bearing which is arranged between an outer ring (3) and an inner ring (2) and which, due to the large size of the bearings, produce large radial and axial displacements between the rings, and which is of the type formed by a central body ending in two radial lips (10, 11) that are applied on the inner ring (2) or outer ring (according to their arrangement), **characterized in that** the side part (3') of the main body (4') is secured with a cover (9) and a fixing element (8) screwed to the outer ring (3), the radial lips (10, 11) extending from this main body (4') in a V shape, said radial lips (10, 11) having, from the bisector thereof, a guiding system with a beam (12) ending in a tip with at least two axially preloaded lips, the end part of the beam (12) and the tip with at least two axial lips being inserted in a rectangular groove (7) made in the inner ring (2).

2. The oil seal for a wind turbine bearing according to claim 1, **characterized in that** the axially preloaded lips are: a top lip (13) and at least one bottom lip (14) the attachment of which form an arrowhead which, together with the bottom radial lip (11) provide tightness to the assembly.

3. The oil seal for a wind turbine bearing according to the claim 2, **characterized in that** the axially preloaded lips forming an arrowhead are made up of a top lip (17) and two bottom lips (18, 19) forming a labyrinth seal.

4. The oil seal for a wind turbine bearing according to claim 1, **characterized in that** the beam (12) has a uniform body and a top thickening (15) and bottom thickening (16) that can have any type of round, oval, square, or rectangular shape.

5. The oil seal for a wind turbine bearing according to claim 1, **characterized in that** the beam (12) tapers upon approaching the tip from the radial lips (10, 11) in a V shape and has a hole (20) in the area of confluence between the initial part of the beam (12) and the mentioned lips (10, 11).

6. The oil seal for a wind turbine bearing according to claim 1, **characterized in that** the length dimensions of the radial lips (10, 11) and of the axial lips (13, 14) are different or are not symmetrical, the bottom lip (11) having a greater accumulation of material in the body of the lip and in the base or area of attachment thereof with the beam (12).

7. The oil seal for a wind turbine bearing according to claim 1, **characterized in that** the cover (9), in its longitudinal form, is segmented and completely covers the diameter formed between the rings (2, 3), with the segments of the cover (9) and the fixing elements (8) which are necessary.

8. The oil seal for a wind turbine bearing according to claim 1, **characterized in that** it is formed by a combination of radial and axial elements the material of which is preferably rubber.
